# EUROPEAN PATENT SPECIFICATION

(11) **EP 2 913 614 B1**
(45) Date of publication and mention of the grant of the patent: **10.01.2018**
(21) Application number: 15156427.5
(22) Date of filing: 24.02.2015
(51) Int. Cl.: F28D 20/00

(54) **Groundwater thermal storage system**
Grundwasserwärmespeicheranlage
Système de stockage thermique des eaux souterraines

(30) Priority: 27.02.2014 JP 2014037561
(43) Date of publication of application: 02.09.2015
(73) Proprietor: MITSUBISHI HEAVY INDUSTRIES THERMAL SYSTEMS, LTD., Tokyo 108-8215 (JP)
(72) Inventor: Togano, Yoshie, Tokyo, 108-8215 (JP); Ueda, Kenji, Tokyo, 108-8215 (JP); Sakai, Masanobu, Tokyo, 108-8215 (JP)
(74) Representative: Henkel, Breuer & Partner

(56) References cited:
- EP-A1- 1 462 736
- WO-A1-83/01272
- CN-A- 1 529 103
- DE-A1- 3 009 990
- JP-A- S5 941 794
- JP-A- 2006 084 149
- JP-A- 2011 075 218
- JP-U- S 607 536
- US-A1- 2012 247 749

## Description

### {Technical Field}

The present invention relates to a groundwater thermal storage system in which groundwater in an aquifer is pumped up to use as a heat source, for example.

### {Background Art}

Water temperature in an aquifer is kept at an approximate constant temperature throughout the year. In recent years, there is proposed an aquifer thermal energy storage system in which groundwater in the aquifer is pumped up to be used as a heat source of a heat pump.

In the aquifer thermal energy storage system, for example, a well for hot thermal storage and a well for cold thermal storage are drilled so that groundwater is pumped up from the well for hot thermal storage during wintertime to be used as a heat source of heating as well as cold drainage of the groundwater after use is poured into the well for cold thermal storage. During summertime, groundwater is pumped up from the well for cold thermal storage to be directly or indirectly used as a heat source of air conditioning as well as hot drainage of the groundwater after use is poured into the well for hot thermal storage (refer to PTLs 1 to 3, for example).

### {Citation List}

### {Patent Literature}

{PTL 1} Japanese Unexamined Patent Application, Publication No. 2013-181676
{PTL 2} Japanese Unexamined Patent Application, Publication No. 2011-226755
{PTL 3} Japanese Unexamined Patent Application, Publication No. 2011-75218

### {Summary of Invention}

### {Technical Problem}

In the case where a cooling load during summertime is larger than a heating load during wintertime, a conventional aquifer thermal energy storage system has a problem in which the amount of heat accumulated in a well in heating and cooling is out of balance to cause a lack of the amount of cold thermal storage during summertime.

The present invention is made in light of the above-mentioned circumstances, and it is an object of the present invention to provide a groundwater thermal storage system capable of resolving a lack of the amount of cold thermal storage during summertime.

### {Solution to Problem}

The present invention is a groundwater thermal storage system that includes: a first thermal storage tank that stores groundwater as a hot heat source; a second thermal storage tank that is connected to the first thermal storage tank through circulating piping, and that stores cold drainage of the groundwater as a hot heat source that is cooled by being used in heat exchange, as a cold heat source; a heat exchange means that is provided in the circulating piping, and that performs heat exchange between the cold heat source from the second thermal storage tank and a first heating medium to cool the first heating medium; and a first cooling means for maintaining a temperature of the first heating medium after cooling within a predetermined temperature range. In the groundwater thermal storage system, hot drainage heated by heat exchange performed by the heat exchange means is stored in the first thermal storage tank as a hot heat source through the circulating piping.

According to the configuration described above, groundwater stored in the first thermal storage tank as a hot heat source is used in heat exchange to be cooled so that cold drainage of the groundwater is stored in the second thermal storage tank as a cold heat source. The heat exchange means performs heat exchange between the groundwater stored in the second thermal storage tank as a cold heat source and the first heating medium so that the groundwater cools the first heating medium. The hot drainage heated by cooling the first heating medium is stored in the first thermal storage tank as a hot heat source. Here, since the cold heat source stored in the second thermal storage tank is generated by applying heat exchange to the hot heat source of the first thermal storage tank, there is a possibility that uneven temperature may occur or the amount of heat may be lacking depending on a state of the heat exchange. In this case, since there is provided the first cooling means for maintaining a temperature of the first heating medium within a predetermined temperature range, even if heat capacity of a cold heat source is lacking or temperature distribution occurs, it is possible to maintain the temperature of the first heating medium within a desired temperature range. The groundwater thermal storage system is an aquifer thermal energy storage system in which groundwater in an aquifer, flowing gently, or groundwater enclosed by impervious walls and the like is used as a heat source, for example, to seasonally heat or cool a heating medium.

In the groundwater thermal storage system, the second thermal storage tank may include a plurality of wells, and a flow rate adjusting means that is provided corresponding to each of the wells to adjust a flow rate of groundwater delivered from each of the wells, and there may be provided a control means that controls the flow rate adjusting means so that a temperature of a hot heat source to be poured into the first thermal storage tank is within a predetermined temperature range.

According to the configuration described above, it is possible to reduce temperature distribution of the hot heat source accumulated in the first thermal storage tank, so that a hot heat source at a steady temperature can be supplied during wintertime or the like, for example.

In the groundwater thermal storage system, the control means may change the number of the wells from which groundwater is pumped up as a cold heat source if only flow rate adjustment by the flow rate adjusting means cannot maintain temperature of the hot heat source within a predetermined temperature range.

Since the number of the wells from which groundwater is pumped up is changed in addition to the flow rate adjustment by the flow rate adjusting means, the flow rate adjustment can be expanded. Accordingly, it is possible to expand a range of temperature adjustment.

The groundwater thermal storage system of the invention includes a water heat source type heat pump apparatus that heats a second heating medium by using a hot heat source from the first thermal storage tank as a heat source, and a first heating means for maintaining temperature of the second heating medium after heating within a predetermined temperature range, and in the groundwater thermal storage system, cold drainage of groundwater after being used in the water heat source type heat pump apparatus as a heat source may be stored in the second thermal storage tank as a cold heat source.

According to the configuration of the invention, a hot heat source from the first thermal storage tank is supplied to the water heat source type heat pump apparatus to be used as a heat source of heating the second heating medium. At this time, if heat capacity of heated water is small against a required load of an external load (such as a heating device) to which the second heating medium is supplied, it is difficult to heat the second heating medium up to a desired temperature. In this case, it is possible to heat the second heating medium up to the desired temperature by operating the first heating means. The cold drainage with a temperature reduced by heat exchange in the water heat source type heat pump apparatus is accumulated in the second thermal storage tank as a cold heat source.

In the groundwater thermal storage system of the invention, the first cooling means is also equipped with ability of the first heating means, and is a heat pump apparatus that has a cooling function and a heating function, and that allows a heating medium flowing into the heat pump apparatus to be switchable for cooling and heating.

According to the configuration of the invention, since the heat pump apparatus cools the first heating medium as well as heats the second heating medium, it is possible to simplify a device configuration. If a heat pump apparatus using air as a heat source is applied to the heat pump apparatus, a cooling tower and the like becomes unnecessary so that it is possible to reduce costs.

The groundwater thermal storage system above may simultaneously perform heating of the second heating medium by using the heat pump apparatus and cooling of the first heating medium by the heat exchange means using a cold heat source in the second thermal storage tank. According to the configuration above, if there is a requirement of both cooling and heating, for example, it is possible to quickly respond the requirement.

The groundwater thermal storage system above may further include a second cooling means that is provided in the circulating piping so as to cool a hot heat source pumped up from the first thermal storage tank with a heat source of air and to pour groundwater after cooling into the second thermal storage tank as a cold heat source.

According to the configuration described above, in a case of a lack of a cold heat source, or the like, it is possible to increase the cold heat source by operating the second cooling means. Accordingly, if there is a lack of heat capacity in only seasonal thermal storage, for example, it is possible to replenish the cold heat source by secondarily operating the second cooling means. As a result, it is possible to store the cold heat source with sufficient heat capacity.

The second cooling means is an air-cooled heat pump apparatus, a heat recovery device, or the like, for example.

In the groundwater thermal storage system above, the second cooling means may be provided instead of the first cooling means.

If the second cooling means can replenish the cold heat source, a sufficient cold heat source is secured to cool the first heat source. Thus, it is possible to eliminate the first cooling means.

The groundwater thermal storage system above may further include a second heating means that is provided in the circulating piping so as to heat a cold heat source pumped up from the second thermal storage tank with a heating medium of air and to pour groundwater after heating into the second thermal storage tank as a hot heat source.

According to the configuration described above, in a case of lack of a hot heat source, or the like, it is possible to increase the hot heat source by operating the second heating means. Accordingly, if there is a lack of heat capacity in only seasonal thermal storage, for example, it is possible to replenish the hot heat source by secondarily operating the second heating means. As a result, it is possible to store the hot heat source with sufficient heat capacity.

The groundwater thermal storage system above may further includes: second piping through which the first heating medium after cooling circulates; third piping in which the first heating medium is used as a cold heat source, and through which a heated first heating medium after heat exchange circulates; bypass piping that connects the second piping and the third piping; a bypass flow rate adjusting means provided in the bypass piping; and a control means that controls the bypass flow rate adjusting means so that temperature of the first heating medium circulating through the third piping is within a predetermined temperature range.

According to the configuration described above, even if a load (such as a cooling load) of an external load using the first heating medium as a heat source is small and temperature of the first heating medium circulating through the third piping decreases, for example, it is possible to maintain a return temperature of the first heating medium at a predetermined value by adjusting a bypass flow rate.

### {Advantageous Effects of Invention}

In accordance with the present invention, there is achieved an effect of resolving a lack of the amount of cold thermal storage during summertime.

### {Brief Description of Drawings}

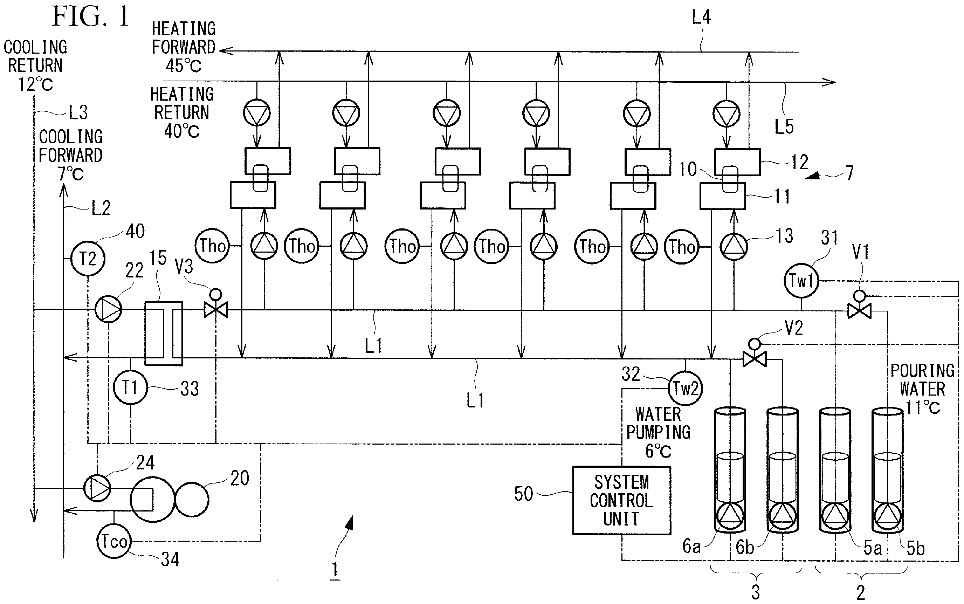

{Fig. 1}
   Fig. 1 shows a schematic configuration of a groundwater thermal storage system in accordance with a first example.
{Fig. 2}
   Fig. 2 is an illustration of an operation of the groundwater thermal storage system in accordance with the first example in the case where groundwater is used in heating (such as use in heating during wintertime).
{Fig. 3}
   Fig. 3 is an illustration of an operation of the groundwater thermal storage system in accordance with the first example in the case where groundwater is used in cooling (such as use in cooling during summertime).
{Fig. 4}
   Fig. 4 shows a schematic configuration of a groundwater thermal storage system in accordance with a second example.
{Fig. 5}
   Fig. 5 is an illustration of an operation of the groundwater thermal storage system in accordance with a third example in the case where groundwater is used in heating.
{Fig. 6}
   Fig. 6 is an illustration of an operation of the groundwater thermal storage system in accordance with the third example in the case where groundwater is used in cooling.
{Fig. 7}
   Fig. 7 shows a schematic configuration of a groundwater thermal storage system in accordance with an embodiment of the present invention.
{Fig. 8}
   Fig. 8 is an illustration of an operation of the groundwater thermal storage system in accordance with the embodiment of the present invention in the case where groundwater is used in heating.
{Fig. 9}
   Fig. 9 is an illustration of an operation of the groundwater thermal storage system in accordance with the embodiment of the present invention in the case where groundwater is used in cooling.
{Fig. 10}
   Fig. 10 is an illustration of an operation of the groundwater thermal storage system in accordance with the embodiment of the present invention when cooling by using groundwater and heating of hot water by using an air-cooled heat pump apparatus are simultaneously performed.
{Fig. 11}
   Fig. 11 shows a schematic configuration of a groundwater thermal storage system in accordance with a fourth example.
{Fig. 12}
   Fig. 12 is an illustration of an operation of the groundwater thermal storage system in accordance with the fourth example when a cold heating medium is increased by using a second cooling device.
{Fig. 13}
   Fig. 13 is an illustration of an operation of the groundwater thermal storage system in accordance with the fourth example when cold water is secondarily cooled by using the second cooling device.
{Fig. 14}
   Fig. 14 is an illustration of another example of an operation of the groundwater thermal storage system in accordance with the fourth example when a cold heating medium is increased by using the second cooling device.
{Fig. 15}
   Fig. 15 is an illustration of another example of an operation of the groundwater thermal storage system in accordance with the fourth example when cold water is secondarily cooled by using the second cooling device.

With reference to the accompanying drawings, the groundwater thermal storage system in accordance with the first example will be described.

Fig. 1 shows a schematic configuration of the groundwater thermal storage system 1. As shown in Fig. 1, a groundwater thermal storage system 1 uses groundwater in an aquifer, flowing gently, or groundwater enclosed by impervious walls as a heat source, like a seasonal aquifer thermal energy storage system and the like, for example, to seasonally heat or cool a heating medium.

Specifically, there are provided a first thermal storage tank 2 in which groundwater serving as a hot heat source is stored and a second thermal storage tank 3 in which groundwater serving as a cold heat source is stored. The first thermal storage tank 2 and the second thermal storage tank 3 are connected by circulating piping L1. Here, the circulating piping L1 is not always one set of piping, but the piping may be divided into piping through which groundwater flows from the first thermal storage tank 2 to the second thermal storage tank 3, and piping through which groundwater flows from the second thermal storage tank 3 to the first thermal storage tank 2, for example.

Each of the first thermal storage tank 2 and the second thermal storage tank 3 includes one or more wells, for example, and each of the wells is provided at its bottom with one of water supply pumps (flow rate adjusting means) 5a, 5b, 6a, and 6b, for pumping up groundwater. Here, it is more preferable that each of the first thermal storage tank 2 and the second thermal storage tank 3 has a plurality of wells with relatively small capacity than has one well with relatively large capacity. Because a minimum flow rate of a water supply pump is normally set at about 50% of a rated flow rate in many cases, it is possible to finely adjust a flow rate in the case where a plurality of small wells is provided so that a flow rate is adjusted by a plurality of water supply pumps with relatively small capacity as compared with a case where one large well is provided so that a flow rate is adjusted by one water supply pump with relatively large capacity.

A system control unit 50 described latter controls a frequency of each of the water supply pumps 5a, 5b, 6a, and 6b so that a flow rate of groundwater pumped up from each of the wells is adjusted.

The groundwater thermal storage system 1 includes a plurality of heat source equipments (water heat source type heat pump apparatuses) 7. Each of the heat source equipments 7 heats hot water (second heating medium) by using groundwater in the first thermal storage tank 2 as a hot heat source. Although Fig. 1 shows six heat source equipments 7, the number of the heat source equipments 7 is not limited. Since each of the heat source equipments 7 has the same configuration, only one heat source equipment 7 is designated by a reference numeral and other heat source equipments are without reference numerals.

Each of the heat source equipments 7 has a heat pump 10, and mainly includes an evaporator 11 that heats a refrigerant by applying heat exchange to a hot heat source from the first thermal storage tank 2, a compressor (not shown) that compresses the refrigerant heated by the evaporator 11, a condenser 12 that heats hot water (second heating medium) by using the compressed refrigerant at a high temperature and high pressure, and an expansion valve (not shown) that reduces pressure of the refrigerant to which the condenser 12 has applied the heat exchange. The refrigerant whose pressure is reduced by the expansion valve is returned to the evaporator 11. Cold drainage of groundwater that is used in the evaporator 11 of the heat source equipment 7 for the heat exchange is poured into the second thermal storage tank 3 as a cold heat source through the circulating piping L1.

Hot water heated at a predetermined temperature (such as 45°C) in the condenser 12 of the heat source equipment 7 is used as a heat source in a heating device (external load, not shown) through hot water forward piping L4, for example. Hot water after heat exchange performed in the heating device decreases in temperature (such as 40°C), and is returned through hot water backward piping L5 to be poured into each of the heat source equipments 7, and then is heated again.

The circulating piping L1 includes a heat exchanger (heat exchange means) 15. Unlike the heat source equipments 7 described above, the heat exchanger 15 uses groundwater in the second thermal storage tank 3 as a cold heat source to cool cold water (a first heating medium). Although Fig. 1 shows one heat exchanger 15, the number of the heat exchanger 15 is not limited. Specifically, the heat exchanger 15 uses a cold heat source from the second thermal storage tank 3 to cool cold water. Hot drainage heated by cooling the cold water is poured into the first thermal storage tank 2 as a hot heat source through the circulating piping L1.

Cold water cooled at a predetermined temperature (such as 7°C) in the heat exchanger 15 is used as a heat source in a cooling device (external load, not shown) through cold water forward piping (second piping) L2, for example. Cold water after heat exchange performed in the cooling device increases in temperature (such as 12°C), and is returned through cold water backward piping L3, and then is cooled again in the heat exchanger 15.

The groundwater thermal storage system 1 further includes a first cooling device (first cooling means) 20 for maintaining temperature of cold water circulating through cold water forward piping L2 within a predetermined temperature range (such as 7°C). The first cooling device 20 cools cold water poured through the cold water backward piping L3 down to a predetermined temperature (such as 7°C), for example, and delivers the cold water to the cold water forward piping L2. For the first cold water device 20, a device that have a function of adjusting a cold water outlet temperature at an outlet preset temperature (such as 7°C) is available, and that includes an air-cooled heat pump apparatus, a water-cooled heat pump apparatus, and the like, for example.

In the groundwater thermal storage system 1 above, each of sets of the circulating piping L1 is provided with electromagnetic valves V1, V2, and V3. The electromagnetic valves V1 and V2 are used for changing the number of wells to be used as a heat source. In Fig. 1, since two wells are provided for each of sets of the circulating piping L1, the number of each of the electromagnetic valves V1 and V2 is one. If the number of the wells is increased, the number of the electromagnetic valves is increased accordingly. In this case, the plurality of electromagnetic valves V1 and V2 is turned off in stages so that the number of the wells to be used is reduced in stages. The electromagnetic valve V3 is used for adjusting a flow rate of groundwater (hot heat source / cold heat source) circulating through the circulating piping L1. The electromagnetic valve is an example, so that another flow rate adjusting means may be available.

A flow rate of a hot heat source supplied to the heat source equipments 7 is adjusted by a water supply pump 13 provided so as to correspond to each of the heat source equipments 7. The water supply pump 13 adjusts a flow rate so that a temperature (a heat source water outlet temperature) Tho of cold drainage to be delivered from each of the heat source equipments becomes a predetermined temperature (such as 6°C).

The groundwater thermal storage system 1 includes: a water supply pump 22 for controlling a flow rate of cold water flowing into the heat exchanger 15; a water supply pump 24 for controlling a flow rate of cold water flowing into the first cooling device 20; a temperature sensor 31 that measures a temperature Tw1 of a hot heat source flowing into and from the first thermal storage tank 2; a temperature sensor 32 that measures a temperature Tw2 of a cold heat source flowing into and from the second thermal storage tank 3; a temperature sensor 33 that measures a temperature T1 of cold water delivered from the heat exchanger 15; a temperature sensor 34 that measures an outlet temperature Tco of the first cooling device 20; and a temperature sensor 40 that measures a temperature T2 of forward cold water.

Measurement results of the temperature sensors 31 to 34 described above are outputted to the system control unit 50. The system control unit 50 controls the water supply pumps 5a, 5b, 6a, and 6b, the electromagnetic valves V1 to V3, and the water supply pumps 22 and 24, described above, on the basis of measurement results of the temperature sensors 31 to 34, and 40.

Next, operation of the groundwater thermal storage system 1 provided with the configuration described above will be described separately in the case where groundwater is used in heating (such as heating during wintertime) and in the case where groundwater is used in cooling (such as cooling during summertime).

### (In the case where groundwater is used in heating)

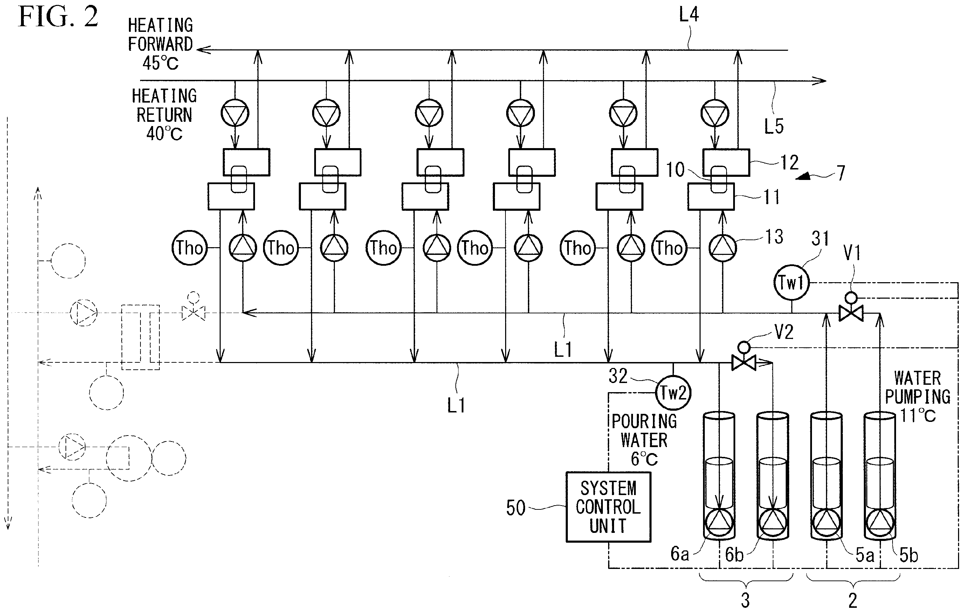

In the case where groundwater is used in heating, as shown in Fig. 2, there is used piping connection without passing through the heat exchanger 15. In this way, the groundwater thermal storage system 1 includes a piping switching means (not shown) that switches connection of piping in the case where groundwater is used in heating and when used in cooling.

In this case, a hot heat source pumped up by each of the water supply pumps 5a and 5b from each of wells of the first thermal storage tank 2 is used as a heat source in each of the heat source equipments 7, and groundwater after heat exchange with a temperature reduced is poured into the second thermal storage tank 3 as a cold heat source. At this time, in each of the heat source equipments 7, each of the water supply pumps 13 is controlled so that the heat source water outlet temperature Tho becomes a predetermined temperature range (such as 6°C). The temperature sensors 31 and 32 measure a temperature Tw1 of the hot heat source circulating through the circulating piping L1 and a temperature Tw2 of the cold heat source circulating therethrough, respectively, and the measured temperatures are outputted to the system control unit 50. The system control unit 50 controls the water supply pumps 5a and 5b, and the electromagnetic valves V1 and V2 so that the temperature Tw2 of the cold heat source becomes the predetermined temperature range (such as 6°C).

The predetermined temperature range is set on the basis of a rated temperature when groundwater in the second thermal storage tank 3 is used as a cold heat source during summertime. For example, if the rated temperature is 7°C, the predetermined temperature range is set at a temperature (such as 6°C) in consideration of a moderate temperature rise. The system control unit 50 reduces a flow rate of water pumped up by each of the water supply pumps 5a and 5b in the case where a heating load is small and the temperature Tw2 of the cold heat source exceeds the predetermined temperature range. When the flow rate is reduced to a lower limit flow rate of the water supply pumps 5a and 5b, the electromagnetic valves V1 and V2 are fully closed so that the number of wells to be used is reduced. The system control unit 50 increases a flow rate of water pumped up by each of the water supply pumps 5a and 5b in the case where a heating load is large and the temperature Tw2 of the cold heat source is less than the predetermined temperature range. If there is still a lack of a flow rate, the closed electromagnetic valves are opened to increase the number of wells to be used in stages. In this way, first a frequency of each of the water supply pumps 5a and 5b is increased or decreased to adjust the flow rate, and if the flow rate is still insufficient by the adjustment, the number of wells to be used is adjusted by controlling the electromagnetic valves V1 and V2.

### (In the case where groundwater is used in cooling)

In this way, groundwater (a cold heat source) adjusted at the predetermined temperature (such as 6°C) and stored in the second thermal storage tank 3 during wintertime is stored while maintained almost at the temperature to be used as a cold heat source during summertime.

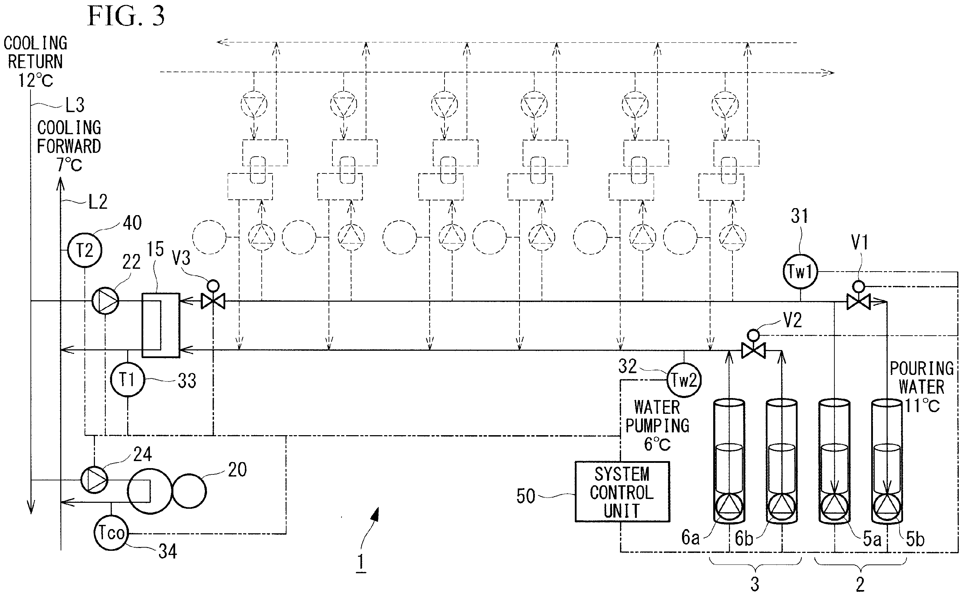

That is, when the groundwater is used in cooling, as shown in Fig. 3, while there is used connection of piping through the heat exchanger 15, operation of the heat source equipment 7 and the water supply pump 13 is stopped. In this state, a cold heat source pumped up by each of the water supply pumps 6a and 6b from each of wells of the second thermal storage tank 3 is delivered to the heat exchanger 15 to cool cold water. Groundwater heated by cooling the cold water is poured into the first thermal storage tank 2 as a hot heat source.

At this time, the system control unit 50 adjusts the water supply pumps 6a and 6b so that a temperature Tw1 of the hot heat source becomes a predetermined temperature range (such as 11°C) to adjust a flow rate of a cold heat source to be supplied to the heat exchanger 15. If only the water supply pumps 6a and 6b cannot control the temperature Tw1 of the hot heat source within the predetermined temperature range, the system control unit 50 controls the electromagnetic valves V1 and V2 to adjust the number of wells to be used, thereby controlling the temperature Tw1 of the hot heat source.

If only heat exchange by the heat exchanger 15 cannot control the cold water at the predetermined temperature (such as 7°C), the system control unit 50 allows the first cooling device 20 to operate to adjust a temperature of the cold water. At this time, system control unit 50 divides a flow rate into the water supply pump 22 and the water supply pump 24 on the basis of a temperature T1 of cold water delivered from the heat exchanger 15 and a temperature T2 of forward cold water. As a result, a frequency of each of the water supply pumps 22 and 24 is controlled.

For example, the system control unit 50 increases a flow rate distribution of the water supply pump 24 as the temperature T1 of cold water delivered from the heat exchanger 15 to increase a flow rate of the cold water to the first cooling device 20.

As described above, according to the groundwater thermal storage system 1 in accordance with the present example, in the case where groundwater is used in heating during wintertime or the like, the heat source equipments 7, the water supply pumps 5a and 5b, and the electromagnetic valves V1 and V2 are controlled so that a temperature of cold drainage after heat exchange performed in each of the heat source equipments 7, or the temperature Tw2 of the cold heat source (groundwater) poured into the second thermal storage tank 3, becomes within a predetermined temperature range. As a result, it is possible to store groundwater with a steady temperature as a cold heat source in the second thermal storage tank 3. Accordingly, when the groundwater stored in the second thermal storage tank 3 during summertime or the like is used as a cold heat source, it is possible to deliver groundwater with a steady temperature as the cold heat source to the heat exchanger 15. In the case where groundwater is used in cooling during summertime, the water supply pumps 6a and 6b, and the electromagnetic valves V1 and V2 are controlled so that a temperature of hot drainage heated by heat exchange performed in the heat exchanger 15, or the temperature Tw1 of the hot heat source (groundwater) poured into the first thermal storage tank 2, becomes within a predetermined temperature range. As a result, it is possible to store groundwater with a steady temperature as a hot heat source in the first thermal storage tank 2. Accordingly, when the groundwater stored in the first thermal storage tank 2 during wintertime or the like is used as a hot heat source in heating, it is possible to deliver groundwater with a steady temperature as the hot heat source to the heat source equipments 7 and the like.

If a temperature T1 of cold water cooled by a cold heat source exceeds a predetermined temperature range, the groundwater thermal storage system 1 in accordance with the present example allows the first cooling device 20 to operate to adjust the temperature T1 of the cold water within the predetermined temperature range. Accordingly, even if heat capacity of a cold heat source stored during wintertime is smaller than a cooling load during summertime, it is possible to control the cold water at a desired temperature by allowing the first cooling device 20 to operate. As a result, it is possible to supply cold water with a steady temperature to the cooling device (external load).

In the present example, although it is configured to allow cold water circulating through the cold water backward piping L3 to flow into the first cooling device 20, and to deliver the cold water cooled in the first cooling device 20 to the cold water forward piping L2, instead of the configuration above, it may be configured to allow cold water circulating through the cold water forward piping L2 to flow into the first cooling device 20, and to deliver the cold water cooled in the first cooling device 20 to the cold water forward piping L2, for example. In this case, a flow rate of the water supply pump 24 and a load of the first cooling device 20 are controlled so that an outlet temperature Tco of the first cooling device 20 becomes a predetermined temperature (such as a required cold water temperature of the cooling device of an external load).

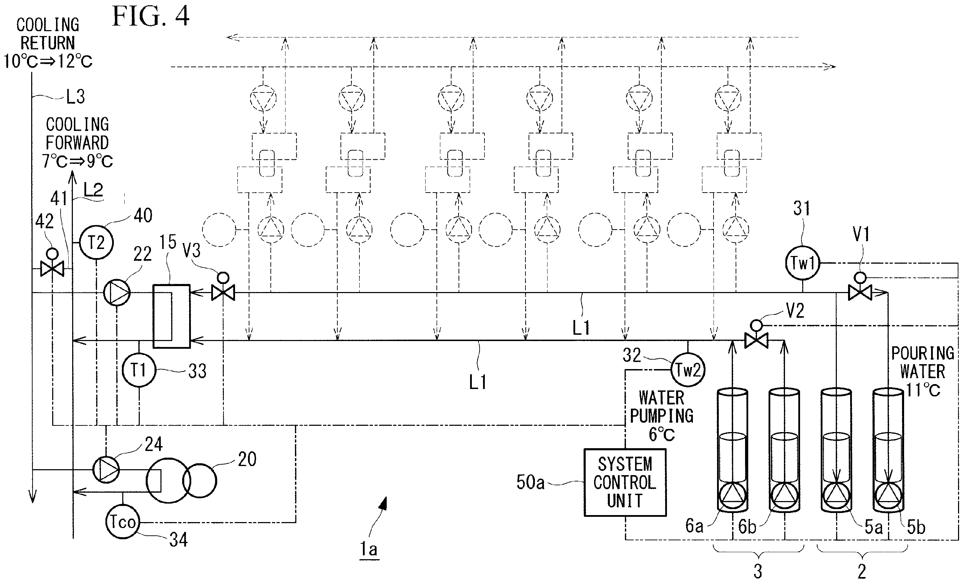

Next, with reference to the accompanying drawings, the groundwater thermal storage system in accordance with the second example will be described. Fig. 4 shows a schematic configuration of a system of the groundwater thermal storage system 1a in accordance with the present example. Here, Fig. 4 shows a state where groundwater is used in cooling, and description of a component identical with that of the first example is omitted by being designated as the same reference numeral as that in the first example. As shown in Fig. 4, in addition to a configuration of the groundwater thermal storage system 1 in accordance with the first example described above, the groundwater thermal storage system 1a further includes bypass piping 41 that bypasses the cold water forward piping L2 and the cold water backward piping L3, and an electromagnetic valve (bypass flow rate adjusting means) 42 that adjusts a flow rate of a heating medium circulating through the bypass piping 41. As above, the groundwater thermal storage system 1a in the present example is different from that in the first example in a configuration in the case where groundwater is used in cooling.

The electromagnetic valve 42 is controlled by a system control unit (control means) 50a. For example, if a cooling load is small and a temperature of cold water circulating through the cold water backward piping L3 is lower than a predetermined value, the system control unit 50a opens the electromagnetic valve 42 to raise the temperature of cold water circulating through the cold water forward piping L2. For example, while a temperature of a heating medium in the cold water backward piping L3 should be usually 12°C, and if a cooling load is small and a temperature of a heating medium flowing through the cold water backward piping L3 decreases to 10°C, the system control unit 50a controls opening of the electromagnetic valve 42 to adjust a bypass flow rate so that the temperature of the heating medium flowing through the cold water backward piping L3 becomes 12°C. Accordingly, for example, a temperature of the cold water flowing through the cold water forward piping L2 is raised from a usual temperature of 7°C to 9°C. As a result, it is possible to maintain a return temperature at 12°C. If the first cooling device 20 is operating, an outlet preset temperature of the first cooling device 20 is also changed from 7°C to 9°C. As a result, it is possible to stabilize temperature of a heating medium circulating through the cold water forward piping L2.

According to the groundwater thermal storage system 1a in accordance with the present example, there are provided bypass piping 41 through which cold water is bypassed between the cold water forward piping L2 and the cold water backward piping L3, and the electromagnetic valve 42 for adjusting a bypass flow rate. Thus, even if a cooling load is small and a temperature of a heating medium circulating through the cold water backward piping L3 decreases, it is possible to maintain a return temperature of cold water at a predetermined value by adjusting the bypass flow rate. Accordingly, it is possible to maintain a temperature of hot drainage of groundwater after heat exchange performed in the heat exchanger 15 within a predetermined range, so that a temperature of a hot heat source stored in the first thermal storage tank 2 can be maintained constant. As a result, it is possible to supply a hot heat source with a steady temperature in the case where groundwater is used in heating.

In the present example, although there are provided the bypass piping 41 and the electromagnetic valve 42 in addition to the configuration of the first example described above, the bypass piping 41 and the electromagnetic valve 42 may be provided instead of the first cooling device 20, for example. In this way, the first cooling device 20 is eliminated, so that it is possible to simplify the configuration.

Next, with reference to the accompanying drawings, the groundwater thermal storage system in accordance with the third example will be described.

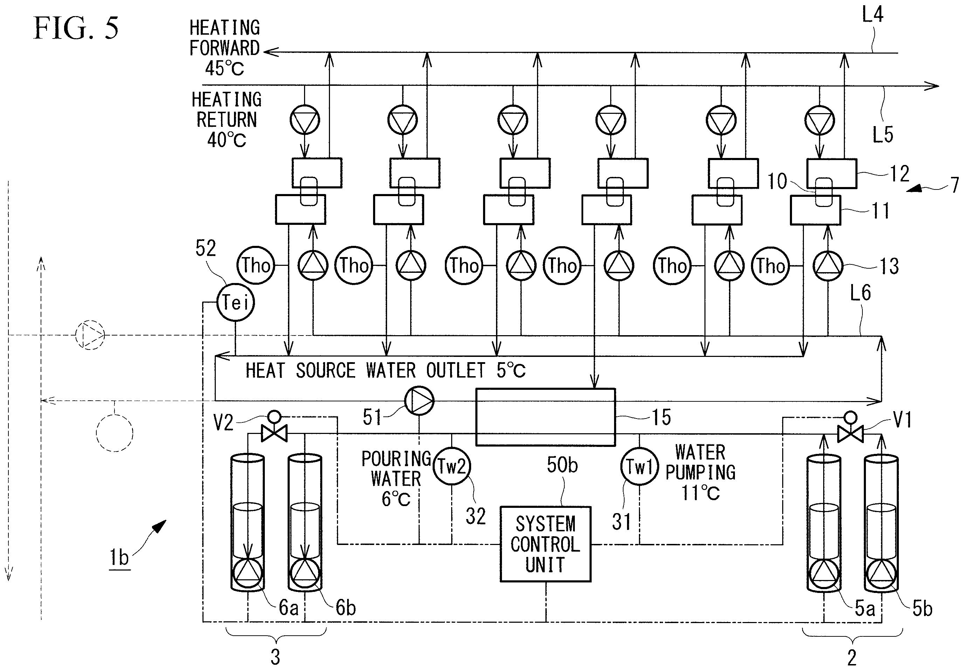

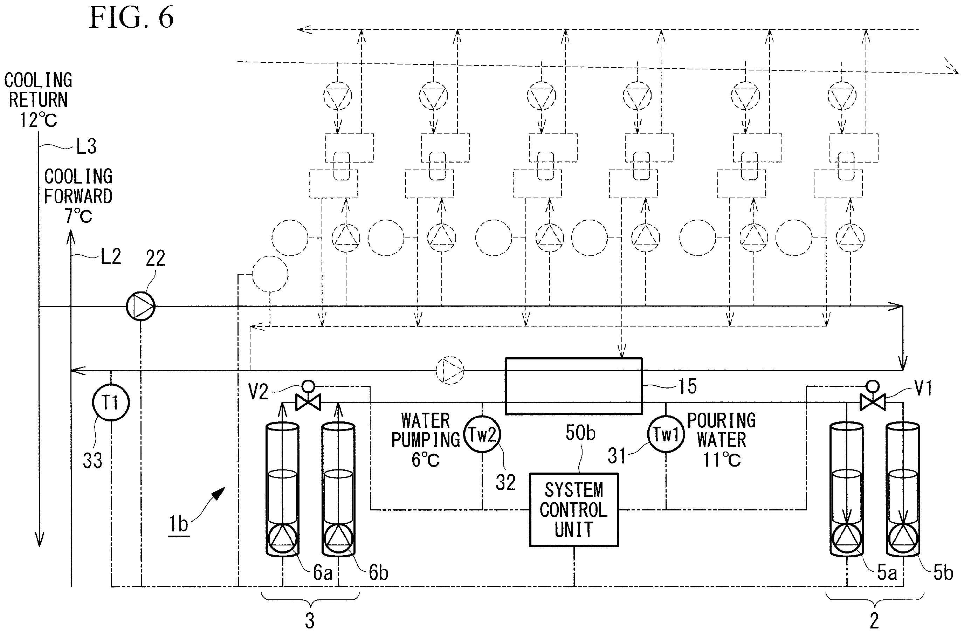

Figs. 5 and 6 show a schematic configuration of a system of the groundwater thermal storage system 1b in accordance with the present example. Fig. 5 shows a configuration in the case where groundwater is used in heating, and Fig. 6 shows a configuration in the case where groundwater is used in cooling. As shown in Fig. 5, unlike the first example in which a hot heat source stored in the first thermal storage tank 2 is directly supplied to each of the heat source equipments 7, the groundwater thermal storage system 1b has a configuration in which heat source water after heat exchange performed in the heat exchanger 15 is supplied to each of the heat source equipments 7. The configuration is effective in the case where it is impossible to directly supply groundwater to each of the heat source equipments 7 (such as high salinity of groundwater, and a high pollution level of groundwater). Hereinafter, operation of the groundwater thermal storage system 1b in accordance with the present example in the case where groundwater is used in heating (such as wintertime) will be described. In the case where groundwater is used in cooling (such as summertime), as shown in Fig. 6, the configuration and the operation are identical with those of the first example described above, so that description thereof is omitted.

### (In the case where groundwater is used in heating)

First, in the case where groundwater is used in heating, as shown in Fig. 5, the heat exchanger 15 performs heat exchange between a hot heat source pumped up from the first thermal storage tank 2 and heat source water. The heat source water heated by the heat exchange with the hot heat source is supplied to each of the heat source equipments 7 to be used as a hot heat source in heating. At this time, each of the heat source equipments 7 operates so that a heat source water outlet temperature Tho becomes a predetermined temperature (such as 5°C), as well as a frequency of each of the water supply pumps 13 provided corresponding to the respective heat source equipments 7 is controlled. Heat source water with a temperature reduced by heat exchange in each of the heat source equipments 7 is returned to the heat exchanger 15 again so that heat exchange is performed with a hot heat source.

On the other hand, cold drainage with a temperature reduced by the heat exchange with the heat source water is poured into the second thermal storage tank 3 as a cold heat source. In this case, a system control unit 50b performs control of a frequency of each of the water supply pumps 5a and 5b, and opening of each of the electromagnetic valves V1 and V2 so that a temperature Tw2 of a cold heat source to be returned to the second thermal storage tank 3 becomes within a predetermined temperature range. The control is identical with that of the first example described above.

The groundwater thermal storage system 1b in accordance with the present example further includes heat source water circulating piping L6 through which heat source water circulates, provided with a water supply pump 51 for adjusting a circulating flow rate of heat source water, and a temperature sensor 52 for measuring a heat source water inlet temperature Tei in the heat exchanger 15. The system control unit 50b controls a frequency of the water supply pump 51 so that the heat source water inlet temperature Tei becomes a predetermined temperature.

As describe above, since the groundwater thermal storage system 1b in accordance with the present example is configured to supply heat source water after heat exchange performed by the heat exchanger 15 to each of the heat source equipments 7 as a heat source, it is possible to heat and cool a heating medium using groundwater in an aquifer as a heat source even if there is a reason that groundwater cannot be directly supplied to each of the heat source equipments 7 due to high salinity of groundwater, a high pollution level of groundwater, and the like.

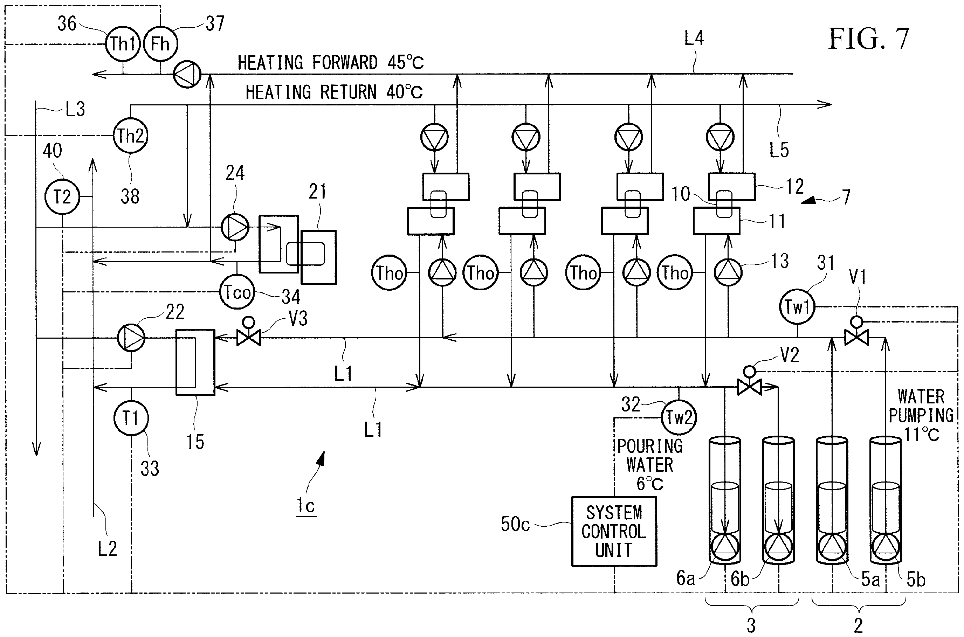

Next, with reference to the accompanying drawings, the groundwater thermal storage system in accordance with the embodiment of the present invention will be described. Fig. 7 shows a schematic configuration of a system of the groundwater thermal storage system 1c in accordance with the present embodiment of the present invention. As shown in Fig. 7, the groundwater thermal storage system 1c uses an air-cooled heat pump apparatus (heating means) 21 having a cooling and heating function, as the first cooling device 20 in the first example. The air-cooled heat pump apparatus 21 also assists in heating operation by each of the heat source equipments 7.

Hereinafter, a configuration and operation of the groundwater thermal storage system 1c in accordance with the present embodiment will be described for each of cases where groundwater is used in heating (such as wintertime)and where groundwater is used in cooling (such as summertime). A configuration identical with that of the first example is designated by the same reference character as that in the first example, and description thereof is omitted.

The groundwater thermal storage system 1c includes the air-cooled heat pump apparatus 21, as shown in Fig. 7. The air-cooled heat pump apparatus 21 heats hot water circulating through the hot water backward piping L5 to deliver the hot water to the hot water forward piping L4 in the case where groundwater is used in heating, and cools cold water circulating through the cold water backward piping L3 to deliver the cold water to the cold water forward piping L2 in the case where groundwater is used in cooling. As above, the present embodiment is configured so that piping connected to an inlet of a heating medium and piping connected to an outlet of a refrigerant in the air-cooled heat pump apparatus 21 are selectable. The water supply pump 24 adjusts a flow rate of a heating medium flowing into the air-cooled heat pump apparatus 21. There is provided a system control unit 50c that controls a frequency of the water supply pump 24. The hot water forward piping L4 is provided with a temperature sensor 36 that measures a temperature Th1 of forward hot water, and with a flow rate sensor 37 that measures a flow rate Fh of hot water, and the hot water backward piping L5 is provided with a temperature sensor 38 that measures a temperature Th2 of return hot water. Measurement results above are transmitted to the system control unit 50c to be used in operation of the air-cooled heat pump apparatus 21, and the like.

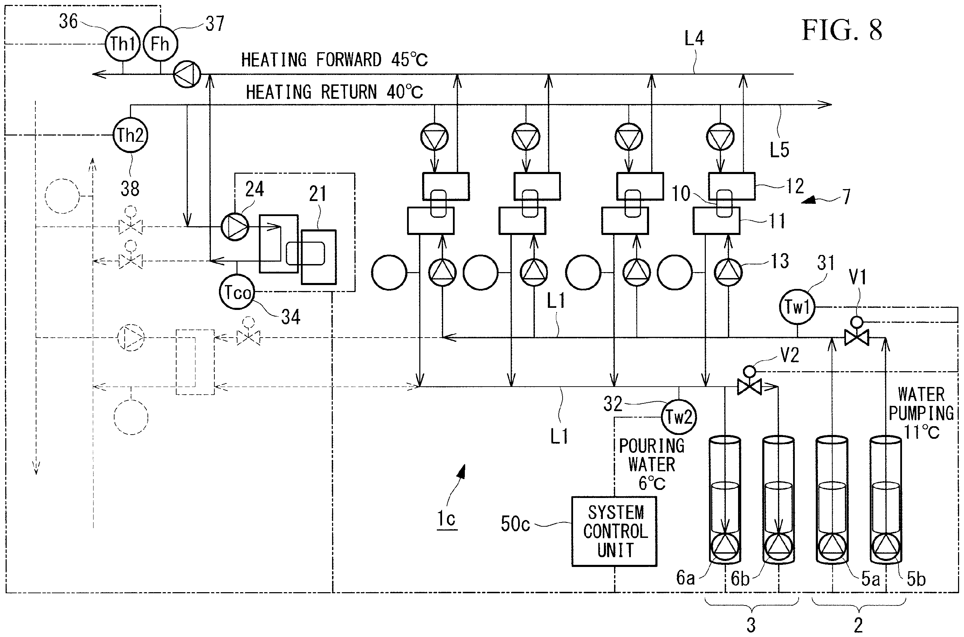

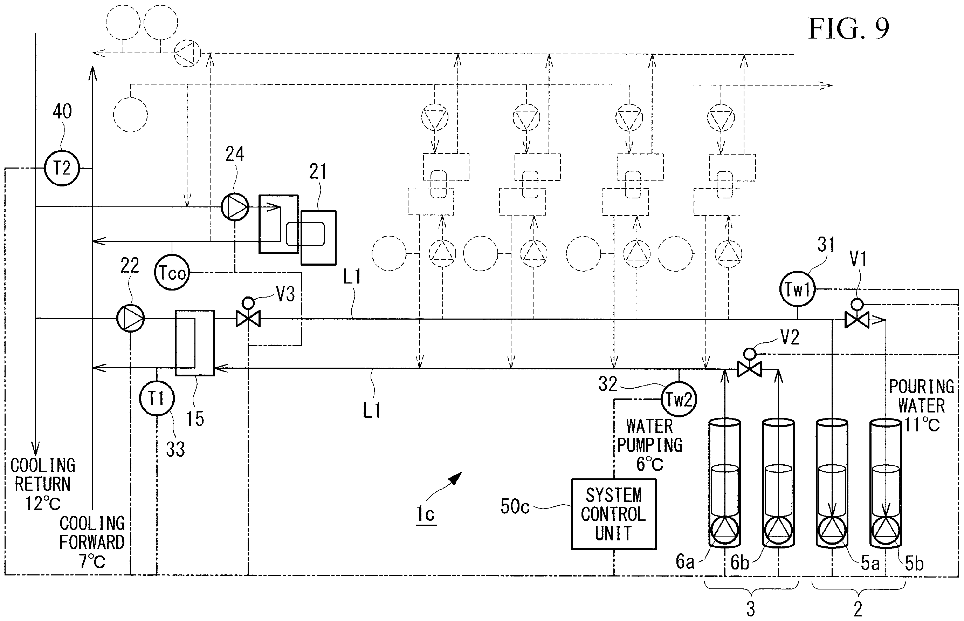

Next, operation of the groundwater thermal storage system 1c in the case where groundwater is used in heating will be described with reference to Fig. 8. As shown in Fig. 9, operation in the case where groundwater is used in cooling is identical with that in the first example described above, so that description thereof is omitted.

### (In the case where groundwater is used in heating)

As shown in Fig. 8, in the case where groundwater is used in heating, the inlet of a heating medium of the air-cooled heat pump apparatus 21 is connected to the hot water backward piping L5, and the outlet of a heating medium thereof is connected to the hot water forward piping L4.

A hot heat source pumped up from the first thermal storage tank 2 is supplied to each of the heat source equipments 7 to heat hot water. This operation is identical with that in the first example described above. In this case, if a heating load exceeds capacity of the heat source equipments 7 to cause a temperature Th1 of forward hot water to become lower than a predetermined temperature (such as 45°C), the air-cooled heat pump apparatus 21 is operated. At this time, the water supply pump 24 adjusts a flow rate of hot water flowing into the air-cooled heat pump apparatus 21. In this way, the air-cooled heat pump apparatus 21 assists in heating of the hot water so that it is possible to supply the hot water with a steady temperature to a heating device of an external load.

As above, according to the groundwater thermal storage system 1c in accordance with the present embodiment, if there is lack of capacity of the heat source equipments 7 to provide a required load in the case where groundwater is used in heating, the air-cooled heat pump apparatus 21 is operated to enable output to be increased. Even if temperature of hot water outputted from each of the heat source equipments 7 varies due to an uneven temperature of groundwater stored in the first thermal storage tank 2, it is possible to absorb variation of temperature by operating the air-cooled heat pump apparatus 21 while adjusting output of the air-cooled heat pump apparatus 21 in response to the variation. As a result, it is possible to supply hot water with a steady temperature to a heating device of an external load.

Likewise, in the case where groundwater is used in cooling, the air-cooled heat pump apparatus 21 can assist in cooling output. Thus, even if there is lack of the amount of thermal storage of groundwater stored in the second thermal storage tank 3 to provide a required load of a cooling device of an external load, and even if a temperature T1 of cold water after heat exchange performed in the heat exchanger 15 varies due to an uneven temperature of groundwater, it is possible to supply cold water with a steady temperature to the cooling device of an external load by adjusting output of the air-cooled heat pump apparatus 21 in response to temperature of cold water.

In the groundwater thermal storage system 1c described above, although the air-cooled heat pump apparatus 21 is operated so as to supplement output of the heat source equipments 7, instead of the operation above, if the amount of heat calculated by a temperature Th1 of forward hot water, a temperature Th2 of return hot water, and a flow rate Fh of hot water, is lower than a predetermined minimum heating load, operation of the heat source equipments 7 may be stopped to provide a heating load by only operating the air-cooled heat pump apparatus 21, for example. As a result, if a heating load is less than the predetermined minimum heating load, it is possible to reduce power consumption by stopping operation of the heat source equipments 7.

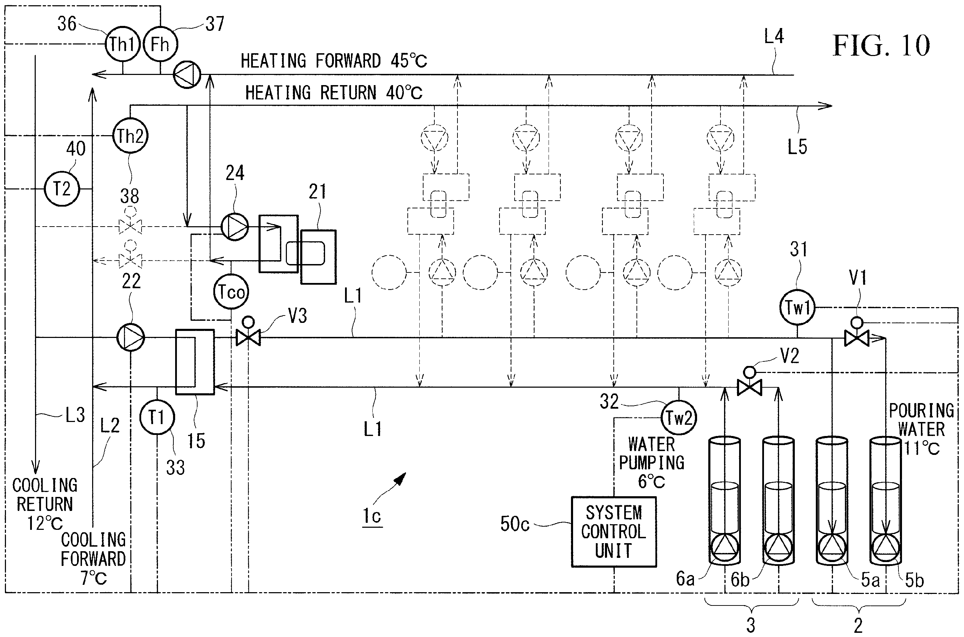

As shown in Fig. 10, when cold water is cooled by using a cold heat source in the second thermal storage tank 3, the air-cooled heat pump apparatus 21 may be allowed to operate heating by connecting the inlet of a heating medium and the outlet of a heating medium to the hot water backward piping L5 and the hot water forward piping L4, respectively. As a result, even if both cooling and heating are simultaneously required, it is possible to respond to the requirement.

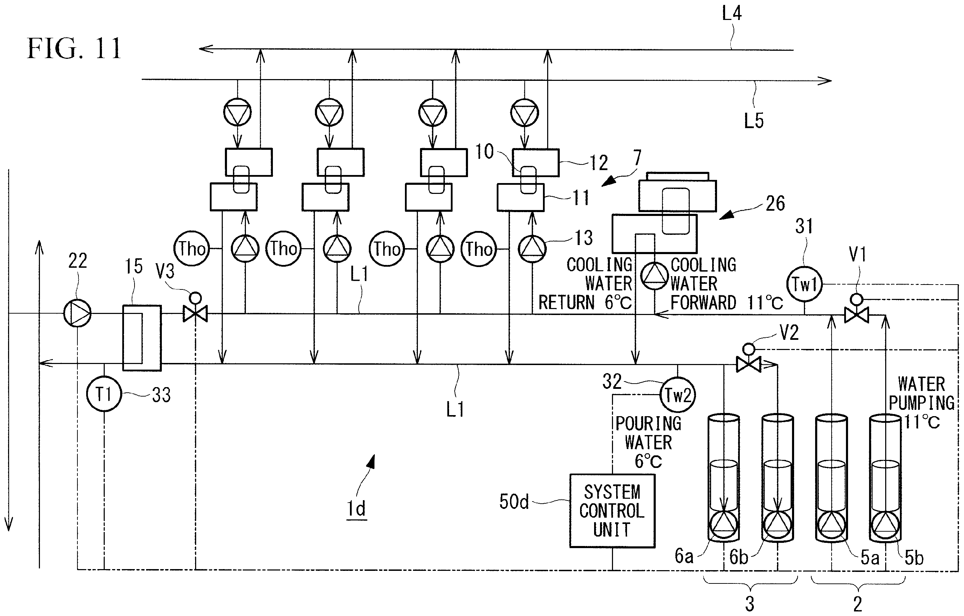

Next, with reference to the accompanying drawings, the groundwater thermal storage system in accordance with the fourth example will be described. Although the groundwater thermal storage system in accordance with each of the first to third example as well as the embodiment of the invention relates to seasonal thermal storage of heating and cooling, a groundwater thermal storage system 1d in accordance with the present embodiment (refer to Fig. 11) performs thermal storage between daytime and nighttime in addition to the seasonal thermal storage. For example, in a country where there is a large difference between a heating load and a cooling load, there is an imbalance between a hot heat source stored in the first thermal storage tank 2 and a cold heat source stored in the second thermal storage tank 3. Thus, for example, in a region where a cooling load exceeds a heating load, there is a possibility that heat capacity of a cold heat source stored in the second thermal storage tank 3 during wintertime may not satisfy a cooling load during summertime. The groundwater thermal storage system 1d in accordance with the present example includes a second cooling device (second cooling means) 26 that pumps up a hot heat source from the first thermal storage tank 2 in a time period in which a cooling load is small in a day (such as midnight period) and cools the hot heat source to pour the hot heat source into the second thermal storage tank 3, thereby securing a cold heat source for a subsequent peak of cooling load.

Fig. 11 shows a schematic configuration of a system of the groundwater thermal storage system 1d in accordance with the preset example. As shown in Fig. 11, the groundwater thermal storage system 1d includes the second cooling device 26 connected to the circulating piping L1, instead of the first cooling device 20 in the groundwater thermal storage system 1 in accordance with the first example. In the case where groundwater in an aquifer is used as a heat source, there is a premise that groundwater should not be mixed with cooling water and circulating cold water. Thus, it is preferable to use a heat source equipment (air-cooled heat pump apparatus) provided with an air-cooled heat pump as the second cooling device 26.

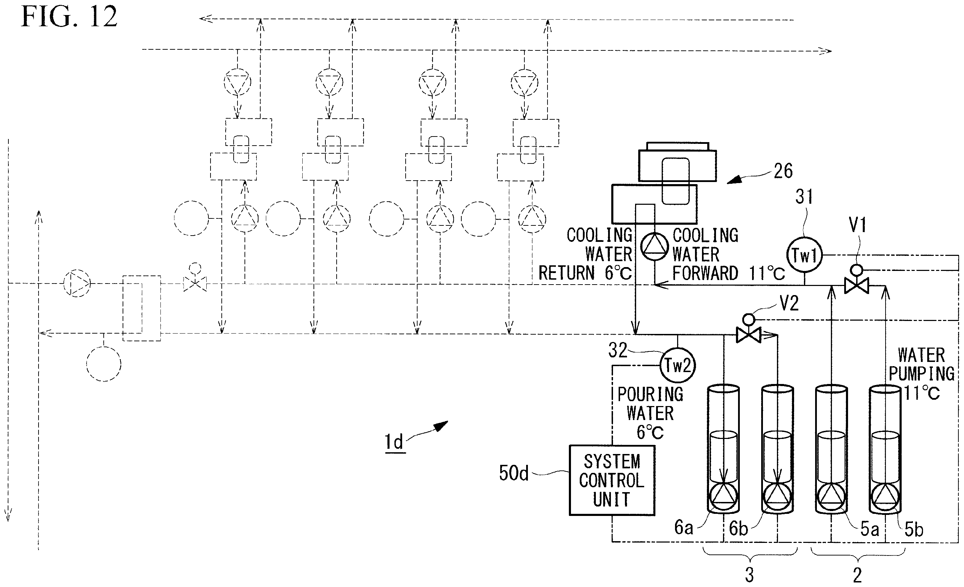

In the groundwater thermal storage system 1d in accordance with the present example, as shown in Fig. 12, the second cooling device 26 is operated in a time period (such as nighttime) in which cooling of cold water by using a cold heat source in the second thermal storage tank 3 is not performed, during summertime, so that a hot heat source pumped up from the first thermal storage tank 2 is cooled and is poured into the second thermal storage tank 3. As a result, it is possible to store a sufficient cold heat source in the second thermal storage tank 3 for a cooling load of the following day, for example.

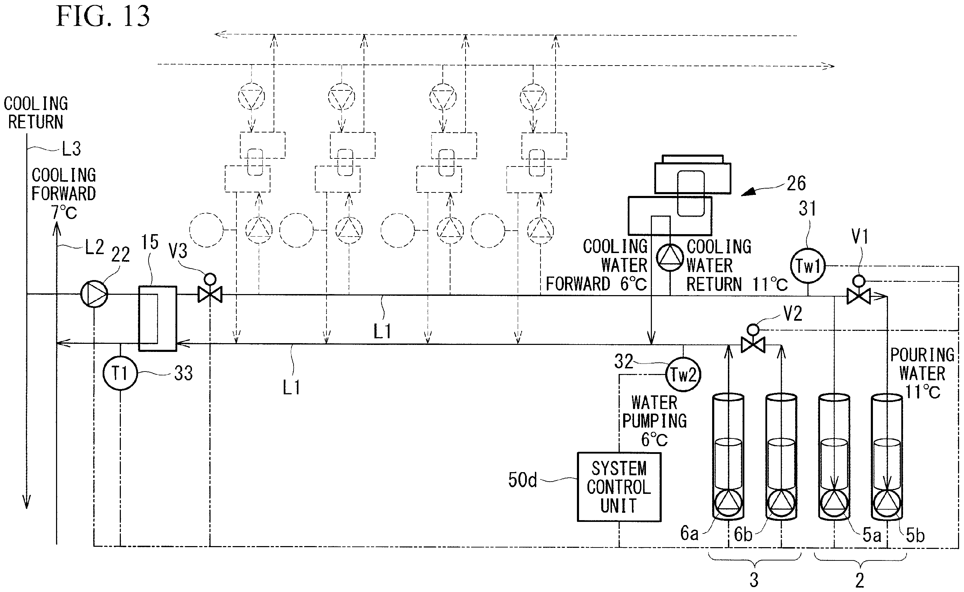

For example, as shown in Fig. 13, in the case where cooling of cold water by using a cold heat source in the second thermal storage tank 3 is performed, if a temperature T1 of cold water exceeds a predetermined temperature range, the second cooling device 26 may be operated to assist in cooling of the cold water. In this way, the second cooling device 26 has a function of the first cooling device 20, so that it is possible to eliminate the first cooling device 20. In this case, since a cold heat source that flows into the heat exchanger 15 is cooled, heat loss increases as compared with the first cooling device 20 in accordance with the first example.

As described above, according to the groundwater thermal storage system 1d in accordance with the present example, even if a sufficient cold heat source that satisfies a cooling load during summertime is not secured during wintertime because a heating load during wintertime is small, it is possible to increase the cold heat source in the second thermal storage tank 2 by cooling a hot heat source in the first thermal storage tank 2 with the second cooling device 26 to pour the hot heat source into the second thermal storage tank 3 when cooling operation using the cold heat source in the second thermal storage tank 3 is not performed. As above, the second cooling device 26 is provided, so that it is possible to finely adjust the amount of thermal storage in the second thermal storage tank 3. If there is lack of capacity of a cold heat source in the case where cooling operation using the cold heat source in the second thermal storage tank 3 is performed, it is possible to assist in cooling by operating the second cooling device 26. As a result, it is possible to supply cold water with a steady temperature to a cooling device of an external load.

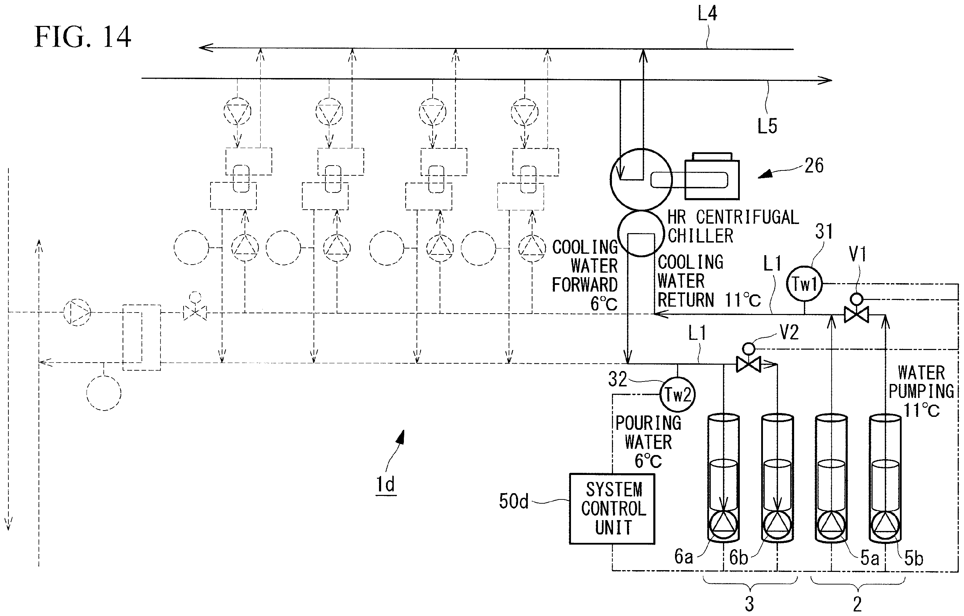

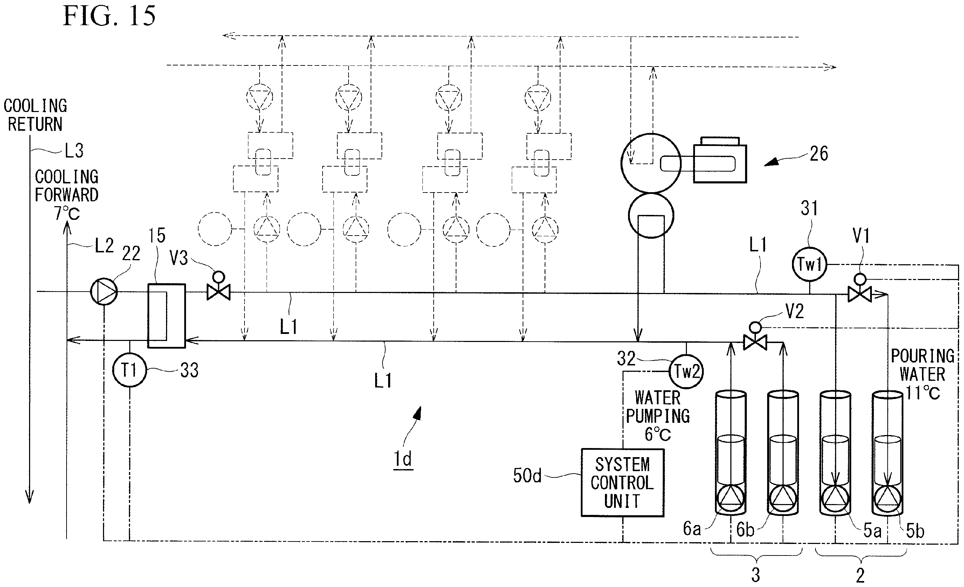

In the present example, although a heat source equipment provided with an air-cooled heat pump is described as the second cooling device 26, for example, a heat recovery device may be used as the second cooling device 26. In the case where the heat recovery device is used, as shown in Fig. 14, hot water may be supplied to a heating device of an external load at the same time when a hot heat source in the first thermal storage tank 2 is poured into the second thermal storage tank 3 after cooled. As shown in Fig. 15, if there is lack of heat capacity of a cold heat source in the case where cooling of cold water using the cold heat source in the second thermal storage tank 3 is performed (such as a case where a temperature T1 of the cold water exceeds a predetermined temperature range), the heat recovery device may be operated to assist in cooling. As a result, it is possible to resolve the lack of heat capacity and to supply cold water with a steady temperature to an external load.

In the description above, although there is shown a case where a cooling load during summertime is larger than a heating load during wintertime, for example, in the case where a heating load during wintertime is larger than a cooling load during summer time, a heating device (second heating device) may be provided instead of the second cooling device 26 so that cold water in the second thermal storage tank 3 is heated and is poured into the first thermal storage tank 2. The heating device may be configured to assist in heating operation using a hot heat source. In the case where a heating load during wintertime and a cooling load during summertime are similar to each other, a heat source equipment having a function of both cooling and heating may be provided.

The present invention is not limited to the embodiment described above, but may include various modifications within a range without departing from the essence of the present invention.

Although an external load serves as a cooling device or a heating device in each of the embodiments described above, for example, the external load is not limited to the example. In addition, although water serves as a heating medium to be cooled by using groundwater and as a heating medium to be heated by using groundwater, for example, a heating medium to be cooled and a heating medium to be heated are not limited to the example.

### {Reference Signs List}

1, 1a, 1b, 1c, and 1d groundwater thermal storage system
2 first thermal storage tank
3 second thermal storage tank
5a, 5b, 6a, and 6b water supply pump
7 heat source equipment
15 heat exchanger
20 first cooling device
21 air-cooled heat pump apparatus
26 second cooling device
41 bypass piping
50, 50a, 50b, 50c, and 50d system control unit
V1 to V3, and 42 electromagnetic valve
L1 circulating piping
L2 cold water forward piping
L3 cold water backward piping
L4 hot water forward piping
L5 hot water backward piping
L6 heat source water circulating piping

## Claims

1. A groundwater thermal storage system (1;1a;1b;1c;1d) comprising:
a first thermal storage tank (2) that is configured to store groundwater as a hot heat source;
a second thermal storage tank (3) that is connected to the first thermal storage tank through circulating piping (L1), and that is configured to store cold drainage of the groundwater as the hot heat source that is cooled by being used in heat exchange, as a cold heat source;
a heat exchange means (15) that is provided in the circulating piping (L1), and that is configured to perform heat exchange between the cold heat source from the second thermal storage tank (3) and a first heating medium to cool the first heating medium; and
a first cooling means (20;21) configured to maintain a temperature of the first heating medium after cooling within a predetermined temperature range,
wherein the system is configured such that hot drainage heated by heat exchange performed by the heat exchange means (15) is stored in the first thermal storage tank (2) as a hot heat source through the circulating piping (L1),
**characterized by** further comprising
a water heat source type heat pump apparatus (7) that is configured to heat a second heating medium by using a hot heat source from the first thermal storage tank (2) as a heat source; and
a first heating means (21) configured to maintain temperature of the second heating medium after heating within a predetermined temperature range,
wherein the system is configured such that cold drainage of groundwater after being used in the water heat source type heat pump apparatus (7) as a heat source is stored in the second thermal storage tank (3) as a cold heat source, and
wherein the first cooling means is equipped with ability of the first heating means, and is a heat pump apparatus (21) that has a cooling function and a heating function, and that allows a heating medium flowing into the heat pump apparatus to be switchable for cooling and heating.

2. The groundwater thermal storage system (1) according to Claim 1, further comprising a control means (50) that is configured to control a flow rate adjusting means (V2) so that a temperature of a hot heat source to be poured into the first thermal storage tank (2) is within a predetermined temperature range, wherein the second thermal storage tank (3) includes a plurality of wells, and the flow rate adjusting means (V2) is provided corresponding to each of the wells to adjust a flow rate of groundwater delivered from each of the wells.

3. The groundwater thermal storage system (1) according to Claim 2, wherein the control means (50) is configured to change the number of the wells from which groundwater is pumped up as a cold heat source if only flow rate adjustment by the flow rate adjusting means (V2) cannot maintain temperature of the hot heat source within a predetermined temperature range.

4. The groundwater thermal storage system (1c) according to any one of Claims 1 to 3, wherein the heat pump apparatus (21) uses air as a heat source.

5. The groundwater thermal storage system (1c) according to Claim 4, wherein the system is configured such that heating of the second heating medium by using the heat pump apparatus (21) and cooling of the first heating medium by the heat exchange means (15) using a cold heat source in the second thermal storage tank (3) can be simultaneously performed.

6. The groundwater thermal storage system (1d) according to any one of Claims 1 to 5, further comprising a second cooling means (26) that is provided in the circulating piping (L1) so as to cool a hot heat source pumped up from the first thermal storage tank (2) with a heat source of air and to pour groundwater after cooling into the second thermal storage tank (3) as a cold heat source.

7. The groundwater thermal storage system according to Claim 6, wherein the second cooling means (26) is an air-cooled heat pump apparatus or a heat recovery device.

8. The groundwater thermal storage system according to any one of Claims 1 to 7, further comprising a second heating means that is provided in the circulating piping (L1) so as to heat a cold heat source pumped up from the second thermal storage tank (3) with a heating medium of air and to pour groundwater after heating into the first thermal storage tank (2) as a hot heat source.

9. The groundwater thermal storage system (1a) according to any one of Claims 1 to 8, further comprising;
second piping (L3) through which the first heating medium after cooling circulates;
third piping (L2) in which the first heating medium is used as a cold heat source, and through which a heated first heating medium after heat exchange circulates;
bypass piping (41) that connects the second piping (L3) and the third piping (L2);
a bypass flow rate adjusting means (42) provided in the bypass piping (41); and
a control means (50a) that is configured to control the bypass flow rate adjusting means (42) so that temperature of the first heating medium circulating through the third piping (L2) is within a predetermined temperature range.

## Patentansprüche

1. Ein Grundwasserwärmespeichersystem (1;1a;1b;1c;1d) mit:
einem ersten Wärmespeichertank (2), der ausgestaltet ist, um Grundwasser als eine heiße Wärmequelle zu speichern,
einem zweiten Wärmespeichertank (3), der mit dem ersten Wärmespeichertank über eine Zirkulationsrohrleitung (L1) verbunden ist und der ausgestaltet ist, um kalte Drainage des Grundwassers als der heißen Wärmequelle, welche durch Verwendung beim Wärmetausch gekühlt wurde, als eine kalte Wärmequelle zu speichern,
einem Wärmeaustauschmittel (15), das in der Zirkulationsrohrleitung (L1) vorgesehen ist und das ausgestaltet ist, um einen Wärmetausch zwischen der kalten Wärmequelle von dem zweiten Wärmespeichertank (3) und einem ersten Heizmedium zum Kühlen des ersten Heizmediums auszuführen, und
einem ersten Kühlmittel (20;21), das ausgestaltet ist, um eine Temperatur des ersten Heizmediums nach dem Kühlen in einem vorbestimmten Temperaturbereich zu halten,
wobei das System so ausgestaltet ist, dass durch den mittels des Wärmeaustauschmittels (15) ausgeführten Wärmetausch erwärmte heiße Drainage in dem ersten Wärmespeichertank (2) als eine heiße Wärmequelle über die Zirkulationsrohrleitung (L1) gespeichert wird,
**dadurch gekennzeichnet, dass** es außerdem aufweist:
eine Wasser-Wärmepumpenvorrichtung vom Wärmequellentyp (7), die ausgestaltet ist, um ein zweites Heizmedium durch Verwendung einer heißen Wärmequelle von dem ersten Wärmespeichertank (2) als eine Wärmequelle zu erwärmen, und
ein erstes Heizmittel (21), das ausgestaltet ist, um eine Temperatur des zweiten Heizmediums nach dem Heizen in einem vorbestimmten Temperaturbereich zu halten,
wobei das System so ausgestaltet ist, dass kalte Drainage von Grundwasser nach dessen Verwendung in der Wasser-Wärmepumpenvorrichtung vom Wärmequellentyp (7) als eine Wärmequelle in dem zweiten Wärmespeichertank (3) als eine kalte Wärmequelle gespeichert wird, und
wobei das erste Kühlmittel mit der Fähigkeit des ersten Heizmittels ausgestattet ist und eine Wärmepumpenvorrichtung (21) ist, die eine Kühlfunktion und eine Heizfunktion besitzt, und die es ermöglicht, dass ein in die Wärmepumpenvorrichtung einströmendes Heizmedium zum Kühlen und Heizen umschaltbar ist.

2. Das Grundwasserwärmespeichersystem (1) gemäß Anspruch 1, ferner mit einem Steuermittel (50), das ausgestaltet ist, um ein Strömungsrateneinstellmittel (V2) so zu steuern, dass eine Temperatur einer heißen Wärmequelle, die in den ersten Wärmespeichertank (2) einzubringen ist, in einem vorbestimmten Temperaturbereich liegt, wobei der zweite Wärmespeichertank (3) eine Vielzahl von Quellen aufweist, und wobei das Strömungsrateneinstellmittel (V2) entsprechend jeder der Quellen vorgesehen ist, um eine Strömungsrate von Grundwasser, das von jeder der Quellen geliefert wird, einzustellen.

3. Das Grundwasserwärmespeichersystem (1) gemäß Anspruch 2, wobei das Steuermittel (50) ausgestaltet ist, um die Anzahl der Quellen, von denen Grundwasser heraufgepumpt wird, als eine kalte Wärmequelle zu verändern, wenn nur eine Strömungsrateneinstellung durch das Strömungsrateneinstellmittel (V2) eine Temperatur der heißen Wärmequelle in einem vorbestimmten Temperaturbereich nicht einhalten kann.

4. Das Grundwasserwärmespeichersystem (1c) gemäß einem der Ansprüche 1 bis 3, wobei die Wärmepumpenvorrichtung (21) Luft als eine Wärmequelle nutzt.

5. Das Grundwasserwärmespeichersystem (1c) gemäß Anspruch 4, wobei das System so ausgestaltet ist, dass ein Erwärmen bzw. Heizen des zweiten Wärmemediums durch Verwendung der Wärmepumpenvorrichtung (21) und das Kühlen des ersten Heizmediums durch das Wärmeaustauschmittel (15) unter Verwendung einer kalten Wärmequelle in dem zweiten Wärmespeichertank (3) gleichzeitig ausgeführt werden kann.

6. Das Grundwasserwärmespeichersystem (1d) gemäß einem der Ansprüche 1 bis 5, ferner mit einem zweiten Kühlmittel (26), das in der Zirkulationsrohrleitung (L1) so vorgesehen ist, dass es eine heiße Wärmequelle, welche von dem ersten Wärmespeichertank (2) heraufgepumpt wird, mit einer Wärmequelle von Luft kühlt und Grundwasser nach dem Kühlen in den zweite Wärmespeichertank (3) als eine kalte Wärmequelle einströmen lässt.

7. Das Grundwasserwärmespeichersystem gemäß Anspruch 6, wobei das zweite Kühlmittel (26) eine luftgekühlte Wärmepumpenvorrichtung oder eine Wärmerückgewinnungseinrichtung ist.

8. Das Grundwasserwärmespeichersystem gemäß einem der Ansprüche 1 bis 7, ferner mit einem zweiten Heizmittel, das in der Zirkulationsrohrleitung (L1) so vorgesehen ist, dass es eine kalte Wärmequelle, die von dem zweiten Wärmespeichertank (3) heraufgepumpt wird, mit einem Heizmedium von Luft erwärmt und Grundwasser nach dem Erwärmen bzw. Heizen in den ersten Wärmespeichertank (2) als eine heiße Wärmequelle einströmen lässt.

9. Das Grundwasserwärmespeichersystem (1a) gemäß einem der Ansprüche 1 bis 8, ferner mit:
einer zweiten Rohrleitung (L3), durch die das erste Heizmedium nach dem Kühlen zirkuliert,
eine dritte Rohrleitung (L2), in der das erste Heizmedium als eine kalte Wärmequelle verwendet wird und durch die ein erstes Heizmedium nach dem Wärmetausch zirkuliert,
einer Bypass-Rohrleitung (41), die die zweite Rohrleitung (L3) und die dritte Rohrleitung (L2) verbindet,
einem Bypass-Strömungsrateneinstellmittel (42), das in der Bypass-Rohrleitung (41) vorgesehen ist, und
einem Steuermittel (50a), das ausgestaltet ist, um das Bypass-Strömungsrateneinstellmittel (42) so zu steuern, dass die Temperatur des ersten Heizmediums, das durch die dritte Rohrleitung (L2) zirkuliert, in einem vorbestimmten Temperaturbereich ist.

## Revendications

1. Système (1; la; 1b; 1c; 1d) de stockage thermique des eaux souterraines, comprenant :
une première cuve (2) de stockage thermique configurée pour stocker des eaux souterraines sous la forme d'une source de chaleur chaude;
une deuxième cuve (3) de stockage thermique, qui communique avec la première cuve de stockage thermique par une canalisation (L1) de circulation et qui est configurée pour stocker un drainage froid des eaux souterraines comme la source de chaleur chaude qui est refroidie en étant utilisée dans un échange thermique, comme source de chaleur froide;
un moyen (15) d'échange de chaleur, qui est prévu dans la canalisation (L1) de circulation et qui est configuré pour effectuer un échange de chaleur entre la source de chaleur froide provenant de la deuxième cuve (3) de stockage thermique et un premier fluide de chauffage pour refroidir le premier fluide de chauffage et
un premier moyen (20; 21) de refroidissement configuré pour maintenir une température du premier fluide de chauffage après refroidissement dans une plage de température déterminée à l'avance,
dans lequel le système est configuré de manière à stocker du drainage chaud, chauffé par échange de chaleur effectué par le moyen (15) d'échange de chaleur, dans la première cuve (2) de stockage thermique, comme source de chaleur chaude dans la canalisation (L1) de circulation,
**caractérisé en ce qu'**il comprend en outre
une installation (7) de pompe à chaleur de type à eau comme source de chaleur, qui est configurée pour chauffer un deuxième fluide de chauffage en utilisant une source de chaleur chaude provenant de la première cuve (2) de stockage thermique, comme source de chaleur et
un premier moyen (21) de chauffage configuré pour maintenir la température du deuxième fluide de chauffage après chauffage dans une plage de température déterminée à l'avance,
dans lequel le système est configuré de manière à ce que du drainage froid des eaux souterraines, après avoir été utilisé dans l'installation (7) de pompe à chaleur à eau comme source de chaleur, soit stocké dans la deuxième cuve (3) de stockage thermique comme source de chaleur froide et
dans lequel le premier moyen de refroidissement est équipé d'aptitude du premier moyen de chauffage et est une installation (21) de pompe à chaleur, qui a une fonction de refroidissement et une fonction de chauffage et qui permet à un fluide de chauffage, allant dans l'installation de pompe à chaleur, d'être commuté entre du refroidissement et du chauffage.

2. Système (1) de stockage thermique des eaux souterraines suivant la revendication 1, comprenant en outre un moyen (50) de commande, qui est configuré pour commander un moyen (V2) de réglage du débit, de manière à ce qu'une température d'une source de chaleur chaude à verser dans la première cuve (2) de stockage thermique soit dans une plage de température déterminée à l'avance, la deuxième cuve (3) de stockage thermique comprenant une pluralité de puits, et le moyen (V2) de réglage du débit étant prévu en correspondance à chacun des puits, pour régler un débit des eaux souterraines fourni par chacun des puits.

3. Système (1) de stockage thermique des eaux souterraines suivant la revendication 2, dans lequel le moyen (50) de commande est configuré pour changer le nombre des puits, dont des eaux souterraines sont pompées, comme source de chaleur froide, seulement si un réglage du débit par le moyen (V2) de réglage du débit ne peut pas maintenir la température de la source de chaleur chaude dans une plage de température déterminée à l'avance.

4. Système (1c) de stockage thermique des eaux souterraines suivant l'une quelconque des revendications 1 à 3, dans lequel l'installation (21) de pompe à chaleur utilise de l'air comme source de chaleur.

5. Système (1c) de stockage thermique des eaux souterraines suivant la revendication 4, dans lequel le système est configuré de manière à ce qu'un chauffage du deuxième fluide de chauffage, en utilisant l'installation (21) de pompe à chaleur, et un refroidissement du premier fluide de chauffage par le moyen (15) d'échange de chaleur, en utilisant une source de chaleur froide dans la deuxième cuve (3) de stockage thermique, peuvent être effectués simultanément.

6. Système (1d) de stockage thermique des eaux souterraines suivant l'une quelconque des revendications 1 à 5, comprenant en outre un deuxième moyen (26) de refroidissement, qui est prévu dans la canalisation (L1) de circulation, de manière à refroidir une source de chaleur chaude, pompée de la première cuve (2) de stockage thermique, par une source de chaleur d'air, et à verser des eaux souterraines, après refroidissement, dans la deuxième cuve (3) de stockage thermique comme source de chaleur froide.

7. Système de stockage thermique des eaux souterraines suivant la revendication 6, dans lequel le deuxième moyen (26) de refroidissement est une installation de pompe à chaleur à refroidissement par de l'air ou un dispositif de récupération de la chaleur.

8. Système de stockage thermique des eaux souterraines suivant l'une quelconque des revendications 1 à 7, comprenant en outre un deuxième moyen de chauffage, qui est prévu dans la canalisation (L1) de circulation, de manière à chauffer une source de chaleur froide pompée de la deuxième cuve (3) de stockage thermique, par un fluide de chauffage d'air et à verser des eaux souterraines, après chauffage, dans la première cuve (2) de stockage thermique comme source de chaleur chaude.

9. Système (1a) de stockage thermique des eaux souterraines suivant l'une quelconque des revendications 1 à 8, comprenant en outre :
une deuxième canalisation (L3) dans laquelle le premier fluide de chauffage circule après refroidissement;
une troisième canalisation (L2) dans laquelle le premier fluide de chauffage est utilisé comme source de chaleur froide et dans laquelle un premier fluide de chaleur chauffé circule après échange de chaleur;
une canalisation (41) de dérivation, qui relie la deuxième canalisation (L3) et la troisième canalisation (L2);
un moyen (42) du réglage de débit de dérivation prévu dans la canalisation (41) de dérivation et
un moyen (50a) de commande, qui est configuré pour commander le moyen (42) de réglage du débit de dérivation, de manière à ce qu'une température du premier fluide de chauffage circulant dans la troisième canalisation (L2) soit dans une plage de température déterminée à l'avance.
